# EUROPÄISCHE PATENTANMELDUNG

(11) **EP 2 339 398 A1**
(43) Veröffentlichungstag der Anmeldung: **29.06.2011**
(21) Anmeldenummer: 08168820.2
(22) Anmeldetag: 12.03.2004
(51) Int. Cl.: G03B 21/62, G02B 5/02

(54) **Kratzunempfindlicher Rückprojektionsschirm und Verfahren zu dessen Herstellung**

(30) Priorität: 04.08.2003 DE 10336129
(62) Teilanmeldung aus: 04719963.3
(71) Anmelder: Evonik Röhm GmbH, 64293 Darmstadt (DE)
(72) Erfinder: Dickhaut-Bayer, Günther, 64560 Riedstadt (DE); Groothues, Herbert, 45721 Haltern am See (DE); Krohmer, Christoph, 71159 Mötzingen (DE); Parusel, Markus, 64409 Messel (DE); Schmidt, Jann, 64331 Weiterstadt (DE)

(57) **Zusammenfassung**

Die vorliegende Erfindung betrifft Rückprojektionsschirm umfassend mindestens eine lichtstreuende Polymethylmethacrylat-Schicht, die eine Polymethylmethacrylat-Matrix sowie sphärische Streupartikel (A) und sphärische Partikel (B) mit unterschiedlicher mittlerer Teilchengröße V₅₀ umfasst, wobei die sphärischen Streupartikel (A) eine mittlere Teilchengröße V₅₀ im Bereich von 0,1 bis 40 µm und einen Brechungsindexunterschied zur Polymethylmethacrylat-Matrix im Bereich von 0,02 bis 0,2 aufweisen, wobei die sphärischen Partikel (B) eine mittlere Teilchengröße V₅₀ im Bereich von 10 bis 150 µm und einen Brechungsindexunterschied zur Polymethylmethacrylat-Matrix im Bereich von 0 bis 0,2 aufweisen, wobei die Gesamtkonzentration der sphärischen Streupartikel (A) und Partikel (B) im Bereich von 1 bis 60 Gew.-%, bezogen auf das Gewicht der lichtstreuenden Polymethylmethacrylat-Schicht, beträgt, wobei die Konzentration der sphärischen Streupartikel (A) C_{PA}, die Dicke der lichtstreuenden Polymethylmethacrylat-Schicht d_{S} sowie die Teilchengröße der sphärischen Streupartikel (A) D_{PA} so gewählt wird, dass das Verhältnis C_{PA}*d_{S}/D_{PA}³ im Bereich von 0,001 bis 0,015 Gew.-%*mm/µm³, die Konzentration der sphärischen Partikel (B) C_{PB}, die Dicke der lichtstreuenden Polymethylmethacrylat-Schicht d_{S} sowie die Teilchengröße der sphärischen Partikel (B) D_{PB} so gewählt wird, dass das Verhältnis C_{PB}*d_{S}/D_{PB}³ im Bereich von 0,000005 bis 0,002 Gew.-%*mm/µm³ und das Verhältnis des Quadrats von mittlerer Oberflächenrauhigkeit der Polymethylmethacrylat-Schicht R_{Z} zur dritten Potenz der Teilchengröße der sphärischen Partikel (B) R_{Z}²/D_{PB}³ im Bereich von 0,0002 µm⁻¹ bis 0,1300 µm⁻¹ liegt.

## Beschreibung

Die vorliegende Erfindung betrifft kratzunempfindliche Rückprojektionsschirme umfassend mindestens eine lichtstreuende Polymethylmethacrylat-Schicht, Verfahren zur Herstellung dieser Rückprojektionsschirme und Verwendung.

Mittels der Rückprojektionstechnik können Informationen einem breiten Publikum zugänglich gemacht werden. Prinzipiell besteht der Aufbau eines solchen Systems aus einer Abbildungsfläche, die von der Rückseite mit einem Projektor beleuchtet wird und so die Information bereitstellt.

Diese Technik findet z.B. Einsatz in Schaltwarten (Kraftwerke, Bahn-Verkehr), um den Verantwortlichen den Überblick über die komplexen Vorgänge zu erleichtern, so dass Steuerungsfehler vermieden werden können. Eine weitere Anwendung sind Anzeigetafeln in z.B. Sportstadien und bei Motorsportrennen. Hier wird den Zuschauern der Verlauf und der Stand des Ereignisses übermittelt, auch wenn sich diese in größerer Entfernung vom eigentlichen Geschehen aufhalten.

Es handelte sich hierbei um sehr große Abbildungsflächen. Durch die ständige Weiterentwicklung auf dem technischen Sektor (Projektortechnik) sind im Laufe der Jahre weitere Anwendungsfelder hinzugekommen.

So wird diese Art der Informationsübermittlung auch in z.B. TV-Geräten, Großraum- und Heim-Kinos, aber auch als Werbeträger auf Messen, in Schaufenstern und Ladengeschäften angewendet.

Des weiteren wird diese Technik auch zur Informationsübermittlung bei Präsentationen und in Flugsimulatoren eingesetzt, wo die virtuelle Umgebung möglichst realitätsnah auf den Cockpit-Scheiben abgebildet wird.

Viele Vorteile dieser Technik werden dadurch erzielt, dass der Projektor außerhalb des Betrachtungsraumes steht. Ein vor der Projektionsfläche befindlicher Betrachter verdeckt somit die Projektion nicht, störende Geräusche des Projektors werden vermieden und eine ansprechende Raumgestaltung ist dadurch möglich.

Mittlerweile gibt es eine Vielzahl von Kunststoffplatten und Folien, die in der Rückprojektionstechnik eingesetzt werden. Häufig werden Platten dahingehend modifiziert, dass diese definierte Oberflächenstrukturen in Form von Fresnellinsensystemen auf der Rückseite und zusätzlich vertikal angeordnete Lenticularlinsen auf der Betrachterseite aufweisen. Die Herstellung dieser Rückprojektionstafeln ist folglich mit einen hohen Aufwand verbunden. Die Oberflächenstrukturen können zudem sehr empfindlich gegenüber mechanischer Belastung sein. Infolge einer Beschädigung wird das Erscheinungsbild der Projektion sehr stark in Mitleidenschaft gezogen.

Des weiteren sind Rückprojektionsplatten und Folien bekannt, die Streumedien aufweisen, wobei derartige Platten Partikel mit einem zur Matrix unterschiedlichen Brechungsindex enthalten. Die Platten und Folien eigenen sich ebenfalls für die Rückprojektion, vereinen aber nicht die gesamte Bandbreite des Anforderungsprofils, so dass nur ein Teil der Anforderungen an einen Schirm erfüllt werden.

Durch die große Anzahl an unterschiedlichen Einsatzmöglichkeiten, werden dem zufolge an die Projektionsfläche die verschiedensten Anforderungen gestellt. In der einen Anwendung müssen die Projektionsflächen z.B. über eine sehr ruhige, klare und hoch aufgelöste Bildwiedergabe verfügen, weil hier der Betrachter über einen längeren Zeitraum die Informationen aufnehmen muss (Beispiel: Schaltwarten, Heim-Kino, usw.).

Werden diese Projektionsflächen zur Präsentation und Werbung beispielsweise auf Messeständen eingesetzt, dann müssen die Flächen besonders unempfindlich gegen mechanische Belastung und Verschmutzung sein, während die Anforderungen an die Projektionsqualität nicht so hoch sind.

Beispielsweise können mit bekannten Streumedien, wie Bariumsulfat und Titandioxid, Platten und Folien hergestellt werden, die über einen hohen Lichtstreuwinkel verfügen. Die Auflösung der Projektion ist ebenfalls hoch. Demnach sollte der Betrachtungswinkel der Abbildung ebenfalls entsprechend hoch sein. Allerdings zeigt sich, dass selbst die Abbildungsschärfe der Projektionsplatten suboptimal sind, wobei die anderen Anforderungen, beispielsweise die Kratzempfindlichkeit, vielen Ansprüchen nicht genügen.

Des weiteren sind Schirme bekannt, die Kunststoffpartikel als Streumedien enthalten. So beschreibt das Dokument JP11179856 Mehrschichtplatten mit mindestens einer Schicht, die eine Polymethylmethacrylat-Matrix sowie vernetzte Polymethylmethacrylat-Perlen als Streu-/Mattierungsmittel umfasst, wobei der Anteil der Perlen im Bereich von 0,5 bis 25 Gew.-% liegt. Die Perlen weisen eine Größe im Bereich von 3 bis 30 µm auf, wobei in den Beispielen lediglich 2 mm dicke Platten beschreiben werden, die etwa 3 Gew.-% Streuperlen einer Größe von ca. 6µm enthalten. Problematisch an diesen Schirmen ist deren Kratzempfindlichkeit.

Die japanische Offenlegungsschrift JP 07234304 beschreibt eine Mischung aus vernetzten Acrylat/Styrol-Perlen (14µm) in einem transparenten Kunststoff. Nachteilig an diesen Schirmen ist, dass Kratzer optisch sehr auffällig sind.

Darüber hinaus sind Scheiben bekannt, die Mischungen von Partikeln umfassen. Die Druckschrift JP 4-134440 beschreibt Platten bei denen zwei Partikelsorten eingesetzt werden, deren Teilchengröße und Brechungsindexunterschied zur Matrix aufeinander abgestimmt sein müssen, wodurch das wellenlängenselektive Streulicht (kleine Partikel streuen blaues Licht stärker, große Partikel rotes Licht) an den Partikeln gegeneinander aufgehoben wird. Die Streuplatten zeichnen sich entsprechend durch einen neutralen Farbton aus.

Weiterhin sind Scheiben bekannt, die für lichttechnische Anwendungen eingesetzt werden können. Derartige Scheiben sind beispielsweise JP 8-198976, JP 5-51480 und JP 2000-296580 dargelegt.

Nachteilig an den zuvor beschriebenen Platten ist einerseits deren suboptimale Bildqualität sowie eine hohe Kratzempfindlichkeit des Schirms.

Die Druckschrift EP-A-0 561 551 beschreibt eine Mehrschichtplatte mit einer Streuschicht aus einer Mischung aus einem transparenten Polymer und sphärischen Partikel (2-15 µm). Auch diese Schirme sind sehr kratzempfindlich.

Problematisch an bekannten, mit Streumedien versehenen Rückprojektionsschirmen ist somit, dass deren Abbildungseigenschaften in Bezug auf ihre Kratzempfindlichkeit nicht optimal sind. Insbesondere weisen die bekannten Schirme eine relativ geringe Bildschärfe oder eine relativ ungünstige Helligkeitsverteilung auf. Darüber hinaus bestehen teilweise Probleme hinsichtlich der Farbechtheit. Weiterhin genügen viele Schirme nicht den mechanischen Anforderungen, wobei insbesondere Kratzer eine optisch nachteilige Wirkung haben.

In Anbetracht des hierin angegebenen und diskutierten Standes der Technik war es mithin Aufgabe der vorliegenden Erfindung, Rückprojektionsschirme anzugeben, die eine besonders hohe Bildqualität bei gleichzeitig geringer Kratzempfindlichkeit ermöglichen. Insbesondere sollten die Schirme eine hohe Bildschärfe und Auflösung des projizierten Bildes erlauben.

Darüber hinaus sollten die Abbildungen auf den Rückprojektionsschirmen besonders farbecht sein.

Eine weitere Aufgabe der vorliegenden Erfindung bestand darin, Rückprojektionsschirme zur Verfügung zu stellen, die eine besonders gleichmäßige Helligkeitsverteilung aufweisen.

Darüber hinaus sollten die Rückprojektionsschirme eine möglichst hohe mechanische Stabilität aufweisen. Hierbei sollten Kratzer auf dem Schirm nicht oder nur geringfügig sichtbar sein. Insbesondere sollten Beschädigungen keinen oder nur einen geringen Einfluss auf das Abbildungsvermögen des Schirmes haben.

Des weiteren lag der Erfindung die Aufgabe zugrunde Rückprojektionsschirme zur Verfügung zu stellen, die besonders einfach hergestellt werden können. So sollten die Rückprojektionsschirme insbesondere durch Extrusion erzeugt werden können.

Darüber hinaus war es mithin Aufgabe der vorliegenden Erfindung, Rückprojektionsschirme zu schaffen, die eine hohe Bildruhe aufweisen. Hierdurch können Darstellungen über einen langen Zeitraum ermüdungsfrei betrachtet werden.

Ein weiteres Ziel der vorliegenden Erfindung bestand darin, Rückprojektionsschirme bereitzustellen, die auf einfache Weise in Größe und Form den Anforderungen angepasst werden können.

Darüber hinaus sollten die Abbildungen auf den Rückprojektionsschirmen besonders kontrastreich sein.

Eine weitere Aufgabe der Erfindung bestand darin, dass die Rückprojektionsschirme eine hohe Haltbarkeit, insbesondere eine hohe Beständigkeit gegen UV-Bestrahlung oder Bewitterung aufweisen.

Des weiteren lag der vorliegenden Erfindung die Aufgabe zugrunde Rückprojektionsschirme zur Verfügung zu stellen, die, bezogen auf ihre Abbildungseigenschaften, nur in einem geringen Maß spiegeln.

Darüber hinaus sollten die Schirme in der Dimension den jeweiligen Anforderungen angepasst werden können. Insbesondere sollte die Dicke der Rückprojektionsschirme an beliebige Anforderungen angepasst werden können, ohne dass hierdurch die Abbildungsqualität sowie die Kratzempfindlichkeit beeinträchtigt werden würde.

Gelöst werden diese Aufgaben sowie weitere, die zwar nicht wörtlich genannt werden, sich aber aus den hierin diskutierten Zusammenhängen wie selbstverständlich ableiten lassen, oder sich aus diesen zwangsläufig ergeben, durch die in Anspruch 1 beschriebenen Rückprojektionsschirme. Zweckmäßige Abwandlungen der erfindungsgemäßen Rückprojektionsschirme werden in den auf Anspruch 1 rückbezogenen Unteransprüchen unter Schutz gestellt.

Hinsichtlich der Verfahren zur Herstellung von Rückprojektionsschirmen liefert der Anspruch 24 eine Lösung der zugrunde liegenden Aufgabe.

Dadurch, dass die Konzentration der sphärischen Streupartikel (A) C_{PA}, die Dicke der lichtstreuenden Polymethylmethacrylat-Schicht d_{S} sowie die Teilchengröße der sphärischen Streupartikel (A) D_{PA} so gewählt wird, dass das Verhältnis C_{PA}*d_{S}/D_{PA}³ im Bereich von 0,001 bis 0,015 Gew.-%*mm/µm³, die Konzentration der sphärischen Partikel (B) C_{PB}, die Dicke der lichtstreuenden Polymethylmethacrylat-Schicht d_{S} sowie die Teilchengröße der sphärischen Partikel (B) D_{PB} so gewählt wird, dass das Verhältnis C_{PB}*d_{S}/D_{PB}³ im Bereich von 0,000005 bis 0,002 Gew.-%*mm/µm³ und das Verhältnis des Quadrats von mittlerer Oberflächenrauhigkeit der Polymethylmethacrylat-Schicht R_{Z} zur dritten Potenz der Teilchengröße der sphärischen Partikel (B) R_{Z}²/D_{PB}³ im Bereich von 0,0002 µm⁻¹ bis 0,1300 µm⁻¹ liegt, wobei der Rückprojektionsschirm mindestens eine lichtstreuende Polymethylmethacrylat-Schicht umfasst, die eine Polymethylmethacrylat-Matrix sowie sphärische Streupartikel (A) und sphärische Partikel (B) mit unterschiedlicher mittlerer Teilchengröße V₅₀ umfasst, wobei die sphärischen Streupartikel (A) eine mittlere Teilchengröße V₅₀ im Bereich von 0,1 bis 40 µm und einen Brechungsindexunterschied zur Polymethylmethacrylat-Matrix im Bereich von 0,02 bis 0,2 aufweisen, wobei die sphärischen Partikel (B) eine mittlere Teilchengröße V₅₀ im Bereich von 10 bis 150 µm und einen Brechungsindexunterschied zur Polymethylmethacrylat-Matrix im Bereich von 0 bis 0,2 aufweisen, wobei die Gesamtkonzentration der sphärischen Streupartikel (A) und Partikel (B) im Bereich von 1 bis 60 Gew.-%, bezogen auf das Gewicht der lichtstreuenden Polymethylmethacrylat-Schicht, beträgt, gelingt es Rückprojektionsschirme zur Verfügung zu stellen, die sowohl eine besonders hohe Bildqualität als auch eine sehr geringe optische Kratzempfindlichkeit ermöglichen.

Durch die erfindungsgemäßen Maßnahmen werden u.a. insbesondere folgende Vorteile erzielt:
➢ Die Rückprojektionsschirme der vorliegenden Erfindung können auf individuelle Bedürfnisse angepasst werden, ohne dass hierdurch die Bildqualität und/oder die Kratzempfindlichkeit verschlechtert werden würden.
   Die Rückprojektionsschirme der vorliegenden Erfindung erlauben eine hohe Bildschärfe und Auflösung des projizierten Bildes.
   Die Abbildung auf den erfindungsgemäßen Rückprojektionsschirmen sind besonders farbecht und kontrastreich.
   Die gemäß der vorliegenden Erfindung zur Verfügung gestellten Rückprojektionsschirme weisen eine besonders gleichmäßige Helligkeitsverteilung auf.
   Darüber hinaus zeigen die Rückprojektionsschirme der vorliegenden Erfindung eine hohe mechanische Stabilität. Hierbei sind Kratzer auf der Schirm nicht oder nur geringfügig sichtbar.
   Des weiteren weisen auf die erfindungsgemäßen Rückprojektionsschirme projizierte Bilder eine hohe Bildruhe auf. Hierdurch können Darstellungen über einen langen Zeitraum ermüdungsfrei betrachtet werden.
➢ Darüber hinaus zeigen die Rückprojektionsschirme der vorliegenden Erfindung ein nicht glänzendes, mattes Oberflächenprofil. Die Ausprägung der Oberflächenstruktur lässt sich gegebenenfalls unterschiedlich einstellen ohne die optischen Parameter, vom Glanz abgesehen, zu beeinflussen. Hierdurch können Spiegelungen, die die Abbildung auf dem Schirm nachteilig beeinflussen reduziert werden.

Des weiteren können die Rückprojektionsschirme der vorliegenden Erfindung besonders einfach hergestellt werden. So können die Rückprojektionsschirme insbesondere durch Extrusion erzeugt werden.

Die erfindungsgemäßen Rückprojektionsplatten zeigen eine hohe Beständigkeit gegen Bewitterung, insbesondere gegen UV-Bestrahlung.

Die Größe und Form der Rückprojektionsschirme kann an die Bedürfnisse angepasst werden.

Die lichtstreuende Polymethylmethacrylat-Schicht des Rückprojektionsschirms gemäß der vorliegenden Erfindung weist 1 bis 60 Gew.-%, insbesondere 3 bis 55 Gew.-% und vorzugsweise 6 bis 48 Gew.-%, bezogen auf das Gewicht der lichtstreuenden Polymethylmethacrylat-Schicht, sphärische Streupartikel (A) und sphärische Partikel(B) auf.

Die Streupartikel (A) und die Partikel (B) sind sphärisch. Der Begriff sphärisch bezeichnet im Rahmen der vorliegenden Erfindung, dass die Partikel vorzugsweise eine kugelförmige Gestalt aufweisen, wobei dem Fachmann offensichtlich ist, dass aufgrund der Herstellungsmethoden auch Partikel mit anderer Gestalt enthalten sein können, oder dass die Form der Partikel von der idealen Kugelgestalt abweichen kann.

Dementsprechend bedeutet der Begriff sphärisch, dass das Verhältnis von der größten Ausdehnung der Partikel zur geringsten Ausdehnung maximal 4, vorzugsweise maximal 2 beträgt, wobei diese Ausdehnungen jeweils durch den Schwerpunkt der Partikel gemessen werden. Vorzugsweise sind mindestens 70, besonders bevorzugt mindestens 90 %, bezogen auf die Zahl der Partikel, sphärisch.

Die Streupartikel (A) weisen eine mittlere Teilchengröße V₅₀ im Bereich von 0,1 bis 40 µm, insbesondere von 1 bis 35 µm, vorzugsweise 2 bis 30 µm, bevorzugt 3 bis 25 µm, insbesondere 4 bis 20 µm und besonders bevorzugt 5 bis 15 µm auf.

Derartige Partikel sind an sich bekannt und können kommerziell erhalten werden. Hierzu gehören insbesondere Kunststoffpartikel sowie Partikel aus anorganischen Materialien, wie bspw. Aluminiumhydroxid, Aluminium-KaliumSilikat (Glimmer), Aluminiumsilikat (Kaolin), Bariumsulfat (BaSO₄), Calciumcarbonat, Magnesiumsilikat (Talkum). Hiervon sind Partikel aus Kunststoff besonders bevorzugt.

Die erfindungsgemäß verwendbaren Kunststoffpartikel sind nicht besonders beschränkt. So ist die Art des Kunststoffs aus dem die Kunststoffpartikel hergestellt werden weitgehend unkritisch, wobei an der Phasengrenze der Kunststoffperlen zum Matrixkunststoff eine Brechung des Lichts stattfindet.

Dementsprechend weist der Brechungsindex der Kunststoffpartikel eine bei der Na-D-Linie (589 nm) und bei 20°C gemessene Brechzahl nₒ auf, die um 0,02 bis 0,2 Einheiten von der Brechzahl nₒ des Matrixkunststoffs unterscheidet.

Vorzugsweise umfassen die sphärische Streupartikel (A) vernetzes Polystyrol, Polysilikon und/oder vernetzte Poly(meth)acrylate.

Eine Gruppe bevorzugter Kunststoffpartikel, die als Streumittel eingesetzt werden, enthalten Silikone. Solche Partikel werden zum Beispiel durch Hydrolyse und Polykondensation von Organotrialkoxysilanen und/oder Tetraalkoxysilanen erhalten, welche durch die Formeln

R¹Si(OR²)₃ und Si(OR²)₄

beschrieben werden, worin R¹ beispielsweise eine substituierte oder unsubstituierte Alkylguppe, eine Alkenylgruppe oder eine Phenylgruppe darstellt, und der Rest R² der hydrolisierbaren Alkoxygruppe eine Alkylgruppe, wie Methyl, Ethyl oder Butyl oder eine Alkoxy-substituierte Kohlenwasserstoffgruppe, wie 2-Methoxyethyl oder 2-Ethoxyethyl darstellt. Beispielhafte Organotrialkoxysilane sind Methyltrimethoxysilan, Methyltriethoxysilan, Methyl-n-propoxysilan, Methyltriisopropoxysilan und Methyltris(2-methoxyethoxy)silan.

Die zuvor genannten Silanverbindungen und Verfahren zur Herstellung sphärischer Silikonpartikel sind der Fachwelt bekannt und in den Schriften EP 1 116 741, JP 63-077940 und JP 2000-186148 beschrieben.

In der vorliegenden Erfindung besonders bevorzugt eingesetzte Streumittel aus Silikon sind von der Firma GE Bayer Silicones unter den Handelsnamen TOSPEARL® 120 und TOSPEARL® 3120 erhältlich.

Eine weitere Gruppe bevorzugter Kunststoffpartikel sind aufgebaut aus:
b1) 25 bis 99,9 Gew.-Teilen von Monomeren, die aromatische Gruppen als Substituenten aufweisen, wie beispielsweise Styrol, α-Methylstyrol, ringsubstituierte Styrole, Phenyl(meth)acrylat, Benzyl(meth)acrylat, 2-Phenylethyl(meth)acrylat, 3-Phenylpropyl(meth)acrylat oder Vinylbenzoat; sowie
b2) 0 bis 60 Gew.-Teilen eines Acryl- und/oder Methacrylsäureesters mit 1 bis 12 C-Atomen im aliphatischen Esterrest, die mit den Monomeren b1) copolymerisierbar sind, wobei beispielhaft genannt seien: Methyl(meth)acrylat, Ethyl(meth)acrylat, n-Propyl(meth)acrylat, i-Propyl(meth)acrylat, n-Butyl(meth)acrylat, i-Butyl(meth)acrylat, tert.Butyl(meth)acrylat, Cyclohexyl(meth)acrylat, 3,3,5-Trimethylcyclohexyl(meth)acrylat, 2-Ethylhexyl(meth)acrylat, Norbornyl(meth)acrylat oder Isobornyl(meth)acrylat;
b3) 0,1 bis 15 Gew.-Teilen vernetzenden Comonomeren, die mindestens zwei ethylenisch ungesättigte, radikalisch mit b1) und gegebenenfalls mit b2) copolymerisierenbare Gruppen aufweisen, wie beispielsweise Divinylbenzol, Glykoldi(meth)acrylat, 1,4-Butandioldi(meth)acrylat, Allyl(meth)acrylat, Triallylcyanurat, Diallylphthalat, Diallylsuccinat, Pentaerythrittetra(meth)acrylat oder Trimethylolpropantri(meth)acrylat, wobei sich die Comonomeren b1), b2) und b3) zu 100 Gew.-Teilen ergänzen.

Besonders bevorzugt weisen Mischungen, aus denen die Kunststoffpartikel hergestellt werden, mindestens 80 Gew.-% Styrol und mindestens 0,5 Gew.-% Divinylbenzol auf.

Die Herstellung von vernetzten Kunststoffpartikeln ist in der Fachwelt bekannt. So können die Streupartikel durch Emulsionspolymerisation hergestellt werden, wie beispielsweise in EP-A 342 283 oder EP-A 269 324 beschrieben, ganz besonders bevorzugt durch Polymerisation in organischer Phase, wie beispielsweise in der deutschen Patentanmeldung P 43 27 464.1 beschrieben, wobei bei der letztgenannten Polymerisationstechnik besonders enge Teilchengrößenverteilungen oder anders ausgedrückt besonders geringe Abweichungen der Teilchendurchmesser vom mittleren Teilchendurchmesser auftreten.

Besonders bevorzugt werden Kunststoffpartikel eingesetzt, die eine Temperaturbeständigkeit von mindestens 200°C, insbesondere von mindestens 250°C aufweisen, ohne dass hierdurch eine Beschränkung erfolgen soll. Hierbei bedeutet der Begriff Temperaturbeständig, dass die Teilchen im wesentlichen keinem wärmebedingten Abbau unterliegen. Ein wärmebedingter Abbau führt in unerwünschter Weise zu Verfärbungen, so dass das Kunststoffmaterial unbrauchbar wird.

Besonders bevorzugte Partikel sind unter anderem von Sekisui unter dem Handelsnamen ®Techpolymer SBX-6, ®Techpolymer SBX-8 und ® Techpolymer SBX-12 erhältlich.

Die zuvor beschriebenen Streupartikel (A) können einzeln oder als Mischung von zwei oder mehr Sorten eingesetzt werden.

Die erfindungsgemäß einzusetzenden Partikel (B) weisen eine mittlere Teilchengrößen V₅₀ im Bereich von 10 bis 150 µm, vorzugsweise 15 bis 70 µm und besonders bevorzugt 30 bis 50 µm auf, wobei der Brechungsindex der Partikel eine der Natrium-D-Linie (589 nm) und bei 20°C gemessene Brechungszahl n₀ aufweisen, die sich um 0 bis 0,2 Einheiten von der Brechungszahl n₀ des Matrix-Kohlenstoffs unterscheidet.

Die Partikel (B) können ebenfalls kommerziell erhalten werden. Diese Partikel können aus den gleichen Materialien wie die Streupartikel (A) hergestellt werden, wobei ebenfalls Kunststoffpartikel bevorzugt eingesetzt werden.

Vorzugsweise umfassen die sphärische Partikel (B) vernetzes Polystyrol, Polysilikon und/oder vernetzte Poly(meth)acrylate.

Die zuvor beschriebenen Partikel (B) können einzeln oder als Mischung von zwei oder mehr Sorten eingesetzt werden.

Vorzugsweise liegt das Gewichtsverhältnis der Streupartikel (A) zu den Partikeln (B) im Bereich von 1:10 bis 10:1, insbesondere 1:5 bis 5:1, besonders bevorzugt 1:3 bis 3:1 und ganz besonders bevorzugt 1:2 bis 2:1.

Die Differenz der mittleren Teilchengröße V₅₀ der Streupartikel (A) und der Partikel (B) beträgt vorzugsweise mindestens 5 µm, insbesondere mindestens 10 µm, wobei die Partikel (B) größer sind als die Streupartikel (A).

Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind.

Gemäß einem besonderen Aspekt der vorliegenden Erfindung liegen diese Teilchen gleichmäßig verteilt in der Kunststoffmatrix vor, ohne dass eine nennenswerte Aggregation oder Zusammenlagerung der Partikel auftritt. Gleichmäßig verteilt bedeutet, dass die Konzentration an Partikeln innerhalb der Kunststoffmatrix im wesentlichen konstant ist.

Die lichtstreuende Schicht umfasst neben den sphärischen Partikeln eine Kunststoffmatrix, die Polymethylmethacrylat (PMMA) aufweist. Vorzugsweise umfasst die lichtstreuende Polymethylmethacrylat-Schicht mindestens 30 Gew.-%, insbesondere mindestens 40 Gew.-% und besonders bevorzugt mindestens 50 Gew.-%, bezogen auf das Gewicht der lichtstreuenden Schicht, Polymethylmethacrylat.

Polymethylmethacrylate werden im allgemeinen durch radikalische Polymerisation von Mischungen erhalten, die Methylmethacrylat enthalten. Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen zur Herstellung von Polymethylmethacrylaten weitere (Meth)acrylate enthalten, die mit Methylmethacrylat copolymerisierbar sind. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,5 bis 3 Gew.-%, bezogen auf das Gewicht der Monomeren, eingesetzt.

Hierbei können verschiedene Poly(meth)acrylate eingesetzt werden, die sich beispielsweise im Molekulargewicht oder in der Monomerzusammensetzung unterscheiden.

Des weiteren kann die Matrix der lichtstreuenden Schicht weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden, wobei auch Copolymere, die von den zuvor genannten Polymere ableitbar sind.

Das Gewichtsmittel des Molekulargewichts M_{w} der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll.

Gemäß einer besonderen Ausführungsform der vorliegenden Erfindung weist die Matrix der lichtstreuenden Polymethylmethacrylat-Schicht mindestens 70, vorzugsweise mindestens 80 und besonders bevorzugt mindestens 90 Gew.-%, bezogen auf das Gewicht der Matrix der lichtstreuenden Schicht, Polymethylmethacrylat auf.

Die Poly(meth)acrylate der Matrix der lichtstreuenden Schicht weisen gemäß einem besonderen Aspekt der vorliegenden Erfindung einen Brechungsindex gemessen bei der Na-D-Linie (589 nm) und bei 20°C im Bereich von 1,46 bis 1,54 auf.

Die Formmassen zur Herstellung der lichtstreuenden Schicht können übliche Zusatzstoffe aller Art enthalten. Hierzu gehören unter anderem Antistatika, Antioxidantien, Entformungsmittel, Flammschutzmittel, Schmiermittel, Farbstoffe, Fliessverbesserungsmittel, Füllstoffe, Lichtstabilisatoren, UV-Absorber und organische Phosphorverbindungen, wie Phosphite oder Phosphonate, Pigmente, Verwitterungsschutzmittel und Weichmacher. Die Menge an Zusatzstoffen ist jedoch auf den Anwendungszweck beschränkt. So sollte die lichtstreuende Eigenschaft der Polymethylmethacrylat-Schicht sowie deren Transparenz nicht zu stark durch Additive beeinträchtigt werden.

Gemäß einem besonderen Aspekt der vorliegenden Erfindung kann die Formmasse gegebenenfalls durch einen Schlagzähmodifier mechanisch stabiler ausgerüstet werden. Der artige Schlagzähmodifizierungsmittel für Polymethacrylat-Kunststoffe sind hinlänglich bekannt, so sind die Herstellung und der Aufbau von schlagzähmodifizierten Polymethacrylat-Formmassen unter anderem in EP-A 0 113 924, EP-A 0 522 351, EP-A 0 465 049 und EP-A 0 683 028 beschrieben.

Bevorzugte schlagzähe Formmassen, die zur Herstellung der Matrix dienen können, weisen 50 - 99 Gew.-%, insbesondere 70-98 Gew.-% Polymethylmethacrylate, bezogen auf das Gewicht der Formmasse ohne Streupartikel (A) und Partikel (B), auf. Diese Polymethylmethacrylate wurden zuvor beschrieben.

Gemäß einem besonderen Aspekt der vorliegenden Erfindung werden die zur Herstellung von schlagzähmodifizierten Formmassen verwendeten Polymethylmethacrylate durch radikalische Polymerisation von Mischungen erhalten, die 80 bis 100 Gew.-%, vorzugsweise 90 - 98 Gew.-%, Methylmethacrylat und gegebenenfalls 0 - 20 Gew.-%, bevorzugt 2 - 10 Gew.-% weitere radikalisch polymerisierbaren Comonomere umfassen, die ebenfalls zuvor aufgeführt wurden. Besonders bevorzugte Comonomere sind unter anderem C₁- bis C₄-Alkyl(meth)acrylate, insbesondere Methylacrylat, Ethylacrylat oder Butylmethacrylat.

Vorzugsweise liegt das mittlere Molekulargewicht M_{w} der Polymethylmethacrylate, die zur Herstellung der schlagzähmodifizierten Matrix dienen können, im Bereich von 90.000 g/mol bis 200.000 g/mol, insbesondere 100.000 g/mol bis 150.000 g/mol.

Bevorzugte schlagzähe Formmassen, die zur Herstellung der Matrix dienen können, enthalten 0,5 bis 55, bevorzugt 1 bis 45, besonders bevorzugt 2 bis 40, insbesondere 3 bis 35 Gew.-% eines Schlagzähmodifizierungsmittels, bezogen auf das Gewicht der Formmasse ohne Streupartikel (A) und Partikel (B), auf, welches eine Elastomerphase aus vernetzten Polymerisatteilchen darstellt.

Das Schlagzähmodifizierungsmittel kann in an sich bekannter Weise durch Perlpolymerisation oder durch Emulsionspolymerisation erhalten werden.

Bevorzugte Schlagzähmodifizierungsmittel stellen vernetzte Teilchen mit einer mittleren Teilchengröße im Bereich von 50 bis 1000 nm, bevorzugt 60 bis 500 nm und besonders bevorzugt 80 bis 120 nm dar.

Derartige Partikel können beispielsweise durch die radikalische Polymerisation von Mischungen erhalten werden, die in der Regel mindestens 40 Gew.-%, bevorzugt 50 bis 70 Gew.-% Methylmethacrylat, 20 bis 80 Gew.-%, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat, wie z. B. Allylmethacrylat und Comonomeren, die mit den zuvor genannten Vinylverbindungen copolymerisiert werden können.

Zu den bevorzugten Comonomeren gehören unter anderem C₁-C₄-Alkyl(meth)acrylaten, wie Ethylacrylat oder Butylmethacrylat, bevorzugt Methylacrylat, oder anderen vinylisch polymerisierbaren Monomeren wie z. B. Styrol. Die Mischungen zur Herstellung der zuvor genannten Partikel können vorzugsweise 0 bis 10, bevorzugt 0,5 bis 5 Gew.-% Comonomere umfassen.

Besonders bevorzugte Schlagzähmodifizierungsmittel sind Polymerisatteilchen, die einen zwei-, besonders bevorzugt einen dreischichtigen Kern-Schale-Aufbau aufweisen. Derartige Kern-Schale-Polymerisate sind unter anderem in EP-A 0 113 924, EP-A 0 522 351, EP-A 0 465 049 und EP-A 0 683 028 beschrieben.

Besonders bevorzugte Schlagzäh-Modifier auf Basis von Acrylatkautschuk haben unter anderem folgenden Aufbau:

| | |
|---|---|
| Kern: | Polymerisat mit einem Methylmethacrylatanteil von mindestens 90 Gew.-%, bezogen auf das Gewicht des Kerns. |
| Schale 1: | Polymerisat mit einem Butylacrylatanteil von mindestens 80 Gew.-%, bezogen auf das Gewicht der ersten Schale. |
| Schale 2: | Polymerisat mit einem Methylmethacrylatanteil von mindestens 90 Gew.-%, bezogen auf das Gewicht der zweiten Schale. |

Der Kern sowie die Schalen können neben den genannten Monomeren jeweils weitere Monomere enthalten. Diese wurden zuvor dargelegt, wobei besonders bevorzugte Comonomere vernetzend wirken.

Beispielsweise kann ein bevorzugter Acrylatkautschuk-Modifier folgenden Aufbau aufweisen:

| | |
|---|---|
| Kern: | Copolymerisat aus Methylmethacrylat (95,7 Gew.-%), Ethylacrylat (4 Gew.-%) und Allylmethacrylat (0,3 Gew.-%) |
| S1: | Copolymerisat aus Butylacrylat (81,2 Gew.-%), Styrol (17,5 Gew.-%) und Allylmethacrylat (1,3 Gew.-%) |
| S2: | Copolymerisat aus Methylmethacrylat (96 Gew.-%) und Ethylacrylat (4 Gew.-%) |

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Kern-Schale-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Derartige Schlagzähmodifier sind von der Fa. Mitsubishi unter dem Handelsnamen METABLEN® IR 441 kommerziell erhältlich. Darüber hinaus können auch schlagzäh-modifizierte Formmassen erhalten werden.

Besonders bevorzugte Formmassen zur Herstellung der Kunststoff-Matrix sind von der Fa. Röhm GmbH & Co. KG kommerziell erhältlich.

Die Dicke der lichtstreuenden Polymethylmethacrylat-Schicht liegt im Allgemeinen im Bereich von 0,05 bis 5 mm, vorzugsweise im Bereich von 0,05 bis 2 mm und besonders bevorzugt im Bereich von 0,1 bis 1 mm.

Erfindungsgemäß wird die Konzentration der sphärischen Streupartikel (A) C_{PA}, die Dicke der lichtstreuenden Polymethylmethacrylat-Schicht d_{S} sowie die Teilchengröße der sphärische Streupartikel (A) D_{PA} so gewählt, dass das Verhältnis aus dem Produkt von Konzentration der sphärische Streupartikel (A) C_{PA} und Dicke der lichtstreuenden Polymethylmethacrylat-Schicht zur dritten Potenz der Teilchengröße der sphärische Streupartikel (A) C_{PA}*d_{S} /D_{PA}³ im Bereich von 0,001 bis 0,015 Gew.-%*mm/µm³, vorzugsweise 0,0025 bis 0,009 Gew.-%*mm/µm³ liegt.

Die Konzentration der sphärischen Partikel (B) C_{PB}, die Dicke der lichtstreuenden Polymethylmethacrylat-Schicht d_{S} sowie die Teilchengröße der sphärische Partikel (B) D_{PB} wird so gewählt, dass das Verhältnis aus dem Produkt von Konzentration der sphärische Streupartikel (B) C_{PB} und Dicke der lichtstreuenden Polymethylmethacrylat-Schicht zur dritten Potenz der Teilchengröße der sphärische Streupartikel (B) C_{PB}*d_{S}/D_{PB}³ im Bereich von 0,000005 bis 0,002 Gew.-%*mm/µm³, vorzugsweise 0,00004 bis 0,0015 Gew.-%*mm/µm³ Gew.-%*mm/µm³ liegt.

Das Verhältnis des Quadrats von mittlerer Oberflächenrauhigkeit der Polymethylmethacrylat-Schicht R_{Z} zur dritten Potenz der Teilchengröße der sphärischen Partikel (B) R_{Z}²/D_{PB}³ kann vorzugsweise im Bereich von 0,0002 µm⁻¹ bis 0,1300 µm⁻¹, insbesondere 0,0009 µm⁻¹ bis 0,0900 µm⁻¹ und vorzugsweise 0,00025 µm⁻¹ bis 0,0600 µm⁻¹ und besonders bevorzugt 0,0025 µm⁻¹ bis 0,0600 µm⁻¹ liegen.

Gemäß einer besonderen Ausführungsform des Schirms der vorliegenden Erfindung ist das Verhältnis Konzentration der sphärischen Streupartikel (A) C_{PA} zur Dicke der lichtstreuenden Polymethylmethacrylat-Schicht d_{S} C_{PA}/d_{S} größer oder gleich 2,5 Gew.-%/mm, insbesondere größer oder gleich 4 Gew.-%/mm.

Gemäß einem besonderen Aspekt des Schirms der vorliegenden Erfindung ist das Verhältnis Konzentration der sphärischen Partikel (B) C_{PB} zur Dicke der lichtstreuenden Polymethylmethacrylat-Schicht d_{S} C_{PB}/d_{S} größer oder gleich 2,5 Gew.-%/mm, insbesondere größer oder gleich 4 Gew.-%/mm.

Das Verhältnis aus Dicke der lichtstreuenden Polymethylmethacrylat-Schicht d_{S} und Teilchengröße der sphärische Streupartikel D_{PA} d_{S}/D_{PA} liegt vorzugsweise im Bereich von 1 bis 500, insbesondere 1 bis 250, bevorzugt 2,5 bis 250 und besonders bevorzugt 2,5 bis 150, ohne dass hierdurch eine Beschränkung erfolgen soll.

Die lichtstreuende Polymethylmethacrylat-Schicht weist vorzugsweise einen Glanz R₈₅. kleiner gleich 60, insbesondere kleiner gleich 40 und besonders bevorzugt kleiner 30 auf.

Die Rückprojektionsschirme der vorliegenden Erfindung, insbesondere die lichtstreuende Polymethylmethacrylat-Schicht zeigen eine besonders geringe Kratzempfindlichkeit. Gemäß einem besonderen Aspekt der vorliegenden Erfindung sind Kratzer, die mit einer Kraft von höchstens 0,4 N, insbesondere von höchstens 0,7 N und besonders bevorzugt von höchstens 1,0 N auf dem Schirm erzeugt werden, visuell nicht erkennbar, ohne dass hierdurch eine Beschränkung erfolgen soll.

Diese Kratzunempfindlichkeit kann gemäß DIN 53799 und DIN EN 438 durch eine visuelle Beurteilung einer geschädigten Oberfläche bestimmt werden, wobei die Schädigung durch einen Diamanten, der mit unterschiedlicher Kraft auf die Oberfläche einwirkt, hervorgerufen wird.

Gemäß einer besonderen Ausführungsform der vorliegenden Erfindung liegt die mittlere Oberflächenrauhigkeit R_{Z} der Platte vorzugsweise im Bereich von 5 µm bis 50 µm, insbesondere 5 bis 25 µm, bevorzugt 6 bis 35 µm, insbesondere 15 µm bis 50 µm, besonders bevorzugt 6 µm bis 30 µm.

Die mittlere Oberflächenrauhigkeit R_{Z} kann gemäß DIN 4768 mit einem Messgerät Talysurf 50 der Fa. Taylor Hobson bestimmt werden, wobei R_{Z} die gemittelte Rautiefe ist, die sich aus den Mittelwerten der Einzelrautiefen von fünf aufeinander folgender Einzelmessstrecken im Rauheitsprofil ergibt.

Die Oberflächenrauhigkeit R_{Z} der Platte ergibt sich im Allgemeinen durch die Wahl der Partikel (B). Darüber hinaus kann dieser Wert durch Variation von verschiedenen Parametern beeinflusst werden, die von der Art der Herstellung abhängig sind.

Hierzu gehören unter anderem die Temperatur der Schmelze während der Extrusion, wobei eine höhere Temperatur der Schmelze zu einer raueren Oberfläche führt. Hierbei ist jedoch zu beachten, dass die Temperatur der Schmelze von der genauen Zusammensetzung der Formmasse abhängig ist.

Im allgemeinen liegt die Temperatur der Schmelze im Bereich von 150 bis 300°C, vorzugsweise im Bereich von 200 bis 290°C. Diese Temperaturen beziehen sich auf die Temperaturen der Schmelze beim Düsenaustritt.

Des weiteren kann die Oberflächenrauhigkeit über den Spalt zwischen den zur Glättung der Platten eingesetzten Walzen beeinflusst werden. Umfasst ein Glättwerk beispielsweise 3 Walzen in L-Anordnung, wobei die Formmasse von der Düse auf den Spalt zwischen Walze 1 und Walze 2 geführt wird und die Walze 2 um 60-180° umschlingt, so wird durch den Spalt zwischen Walze 2 und Walze 3 eine Glättung der Oberflächen erzielt. Wird der Spalt zwischen Walze 2 und Walze 3 auf Plattendicke eingestellt, so werden die Streupartikel auf der Plattenoberfläche in die Matrix eingedrückt, wodurch sich die Oberfläche glatter darstellt. Im allgemeinen wird dieser Spalt zur Erzielung einer raueren Oberfläche etwas größer eingestellt als die Plattendicke der herzustellenden Platte, wobei dieser Wert vielfach im Bereich von 0,1 bis 2 mm über Plattendicke, vorzugsweise 0,1 bis 1,5 mm über Plattendicke liegt, ohne dass hierdurch eine Beschränkung erfolgen soll. Des weiteren wird die Oberflächenrauhigkeit durch die Partikelgröße sowie die Plattendicke beeinflusst, wobei die Ausführungsbeispiele die Abhängigkeiten darlegen.

Die lichtstreuende Schicht kann über bekannte Verfahren hergestellt werden, wobei thermoplastische Formgebungsverfahren bevorzugt sind. Nach Zugabe der Partikel können aus den zuvor beschriebenen Formmassen lichtstreuenden Schichten durch herkömmliche thermoplastische Formgebungsverfahren hergestellt werden.

Gemäß einer besonderen Ausführungsform wird zur Extrusion oder zur Herstellung von Streuperlen enthaltenden Formmassen-Granulaten ein Doppelschneckenextruder verwendet. Hierbei werden die Kunststoffpartikel vorzugsweise in die Schmelze im Extruder überführt. Durch diese Maßnahme können Schmelzen erhalten werden, aus denen Schirme bereitgestellt werden können, die eine besonders hohe Transmission aufweisen.

Hierbei können die Rückprojektionsschirme über einen Zweistufenprozess hergestellt werden, bei welchem man einer erfindungsgemäßen Sidefeeder-Compoundierung auf einem Doppelschneckenextruder und Zwischengranulierung die Extrusion der Folie oder Platte auf einem Einschneckenextruder nachschaltet. Das über den Doppelschneckenextruder erhaltene Granulat kann besonders hohe Anteile an Streuperlen erhalten, so dass durch Abmischung mit Formmassen ohne Streuperlen auf einfache Weise Projektionsschirme mit unterschiedlichem Streuperlengehalt hergestellt werden können.

Des weiteren kann auch ein Einstufenprozess durchgeführt werden, bei welchem die Eincompoundierung der sphärischen Kunststoffpartikel in die Schmelze wie beschrieben auf einem Doppelschneckenextruder erfolgt, welchem ggf. ein druckerhöhendes Aggregat (z.B. Schmelzepumpe) nachgeschaltet ist, an welches sich die Extrusionsdüse unmittelbar anschließt, mit welcher ein flächiges Produkt ausgeformt wird. Überraschend können durch die zuvor beschriebenen Maßnahmen Rückprojektionsschirme mit einem besonders geringen Gelbindex erhalten werden.

Des weiteren können die Schirme auch durch Spritzguss hergestellt werden, wobei jedoch die Verfahrensparameter bzw. die Gussform so zu wählen sind, dass eine Oberflächenrauhigkeit im erfindungsgemäßen Bereich erzielt wird.

Die Compoundierung der Matrix mit den Streupartikel erfolgt vorzugsweise durch einen Doppelschneckenextruder, bei der eigentlichen Plattenextrusion kann ebenfalls ein Einschneckenextruder zum Einsatz kommen, ohne dass hierdurch eine Beschränkung erfolgen soll.

Je nach Verwendungsart kann die lichtstreuende Polymethylmethacrylat-Schicht als Schirm eingesetzt werden. Hierbei können die dünneren Schichten als aufrollbare Folie Verwendung finden. Besonders bevorzugte Folien werden durch die zuvor dargelegten Methoden schlagzäh ausgerüstet.

Des weiteren kann eine dünne lichtstreuende Polymethylmethacrylat-Schicht auf eine Kunststoffplatte aufgebracht werden, um deren mechanische Stabilität zu erhöhen. Diese Kunststoffplatte, die als Trägerschicht dient, weist vorzugsweise einen Intensitätshalbwertswinkel kleiner als 6,5°, insbesondere kleiner oder gleich 6°, bevorzugt kleiner oder gleich 5° und besonders bevorzugt kleiner oder gleich 3° auf. Dementsprechend umfasst die Trägerschicht keine oder nur eine geringe Menge an sphärischen Partikel auf, die eine Streuwirkung haben. Vorzugsweise weist diese Kunststoffplatte Poly(meth)acrylate auf.

Vorzugsweise weist die Oberfläche der Trägerschicht bei einem Winkel von 60° einen Glanz kleiner oder gleich 70, bevorzugt kleiner oder gleich 60, insbesondere kleiner oder gleich 40, besonders bevorzugt kleiner oder gleich 30 und ganz besonders bevorzugt kleiner oder gleich 15 auf.

Gemäß einer bevorzugten Ausführungsform weist die Trägerschicht eine mittlere Oberflächenrauhigkeit R_{Z} im Bereich von vorzugsweise 2 µm bis 45 µm, insbesondere 3 bis 40 µm, bevorzugt 5 bis 35 µm auf. Hierdurch können Spiegelungen des auf den Schirm projizierten Bildes in den Raum vermieden werden, ohne dass die Bildqualität beeinträchtigt wird.

Gemäß einem besonderen Aspekt der vorliegenden Erfindung weist der Schirm eine Transmission größer oder gleich 25%, insbesondere größer oder gleich 40% und besonders bevorzugt größer oder gleich 55% auf, wobei diese Werte insbesondere von Schirmen ohne kontrastverbessernde Farbstoffen erzielt werden.

Gemäß einem besonderen Aspekt der vorliegenden Erfindung kann die Formmasse eingefärbt werden. Durch diese Maßnahme kann überraschend der Kontrast verbessert werden. Zur Einfärbung eignen sich insbesondere an sich bekannte Farbstoffe und/oder Russ. Besonders bevorzugte Farbstoffe sind kommerziell erhältlich. Hierzu gehören unter anderem ®Sandoplast Rot G und ®Sandoplast Gelb 2G jeweils von Clariant sowie ®Macrolex Grün 5B und ®Macrolex Violett 3R jeweils von Bayer. Die Konzentration dieser Farbstoffe ist abhängig von dem gewünschten Farbeindruck sowie der Dicke der Platte. Ohne dass hierdurch eine Beschränkung erfolgen soll, liegen diese Konzentration pro Farbstoff im allgemeinen im Bereich von 0 bis 0,8 Gew.-%, vorzugsweise 0,000001 bis 0,4 Gew.-%, bezogen auf das Gesamtgewicht der eingefärbten Formmasse ohne Streupartikel (A) und Partikel (B). Die Summe der Farbstoffkonzentrationen liegt vorzugsweise im Bereich von 0 bis 1 Gew.-%, vorzugsweise 0,0001 bis 0,6 Gew.-%, bezogen auf das Gesamtgewicht der eingefärbten Formmasse ohne Streupartikel (A) und Partikel (B). Der Verlust an Transmission kann zumindest teilweise durch stärkere Projektoren ausgeglichen werden.

Vorzugsweise zeigt der Schirm einen Gelbwert kleiner oder gleich 12, insbesondere kleiner oder gleich 10, ohne dass hierdurch eine Beschränkung erfolgen soll.

Eine besondere Ausführungsform des Schirms der vorliegenden Erfindung weist einen Intensitätshalbwertswinkel größer oder gleich 15°, insbesondere größer oder gleich 25° auf.

Gemäß einem besonderen Aspekt der vorliegenden Erfindung zeigt der Schirm ein Streuvermögen größer oder gleich 0,15, insbesondere größer oder gleich 0,35, ohne dass hierdurch eine Beschränkung erfolgen soll.

Gemäß einer bevorzugten Ausführungsform zeigen die Oberfläche der erfindungsgemäßen Polymethylmethacrylat-Platten in Reflexion auf der Streuscheibe ein mattes Erscheinungsbild. Durch die Glanzmessung mit einem Reflektometer nach DIN 67530 kann die Charakterisierung vorgenommen werden. Vorzugsweise liegt der Glanz der Platten bei einem Winkel von 85° unterhalb von 60, besonders bevorzugt unterhalb von 40 und ganz besonders bevorzugt unterhalb von 30.

Die Größe und Form des Rückprojektionsschirms der vorliegenden Erfindung ist nicht begrenzt. Im allgemeinen weist der Schirm jedoch eine rechteckige, tafelförmige Gestalt auf, da Bilder üblich in diesem Format dargestellt werden.

Bevorzugt weist ein derartiger Rückprojektionsschirm eine Länge im Bereich von 25 mm bis 10000 mm, vorzugsweise von 50 bis 3000 mm und besonders bevorzugt von 200 bis 2000 mm auf. Die Breite dieser besonderen Ausführungsform liegt im allgemeinen im Bereich von 25 bis 10000 mm, vorzugsweise von 50 bis 3000 mm und besonders bevorzugt von 200 bis 2000 mm. Um eine besonders große Projektionsfläche bereitzustellen, können mehrere dieser Schirm zusammengefasst werden.

Gemäß einer besonderen Ausführungsform weist der Schirm eine besonders hohe Wetterfestigkeit gemäß DIN EN ISO 4892, Teil 2 -Künstliches bewittern oder bestrahlen in Geräten, gefilterte Xenonbogenbestrahlung- auf.

Die erfindungsgemäßen Rückprojektionsschirme können für weitere lichttechnische Anwendungen, beispielsweise als Streuscheiben in LCD-Monitoren eingesetzt werden.

Nachfolgend wird die Erfindung durch Beispiele und Vergleichsbeispiele eingehender erläutert, ohne dass die Erfindung auf diese Beispiele beschränkt werden soll.

### A) Messmethoden

Die mittlere Rauhigkeit R_{Z} wurde gemäß DIN 4768 mit einem Messgerät Talysurf 50 der Fa. Taylor Hobson bestimmt.

Die Transmission τ_{D65/2°} wurde gemäß DIN 5036 mit einem Messgerät Lambda 19 der Fa. Perkin Elmer bestimmt.

Der Gelbwert τ_{D65/10°} wurde gemäß DIN 6167 mit einem Messgerät Lambda 19 der Fa. Perkin Elmer bestimmt.

Der Glanz R85° wurde bei 85° gemäß DIN 67530 mit einem Messgerät Dr. Lange Labor-Reflektometer der Fa. Dr. Lange bestimmt.

Das Streuvermögen und des Intensitätshalbwertswinkels wurde gemäß DIN 5036 mit einem Messgerät LMT-Goniometer-Messplatz GO-T-1500 der Fa. LMT bestimmt.

Die verschiedenen Rückprojektionsschirme wurden zusätzlich visuell nach den in Tabelle 1 dargelegten Kriterien beurteilt.

Hierzu wurde ein Projektor der Marke Epson EMP-713 verwendet. In einem Abstand zur Abbildung von ca. 1-1,5m wurde das Testbild bei mehrere Winkel (0° = senkrecht zur Projektionsnormalen, 30° und 60°) beurteilt. Der Abstand des Projektors zur Projektionsplatte betrug ca. 85 cm bei einer Abbildungsdiagonalen von ca. 50 cm.

### Technische Daten Epson Projektor EMP 713:

Projektionssystem: Dichroitisches Spiegel und Linsensystem, Bildelemente: 2359296 Pixel (1024x768)*3, Helligkeit: 1200 ANSI Lumen, Kontrast: 400:1, Bildausleuchtung: 85%, Farbwiedergabe: 24 bit bei 16,7 Mio Farben, H: 15-92 kHz, V: 50-85 Hz, Lampe: 150 Watt-UHE, Video-Auflösung: 750 TV-Zeilen

**Tabelle 1**

| Kriterium | Eigenschaft |
|---|---|
| Hot Spot | Unter einem Hot Spot wird eine auf den Lichtkegel der Projektionsbeleuchtung zurückzuführende Lichtverteilung verstanden. Demzufolge ist ein Hot Spot ein Lichtkegel, der in seinem Zentrum wesentlich heller ist als zum Rand der Abbildung. Bei einem stark ausgeprägtem Hot Spot ist die Projektorlampe visuell erkennbar. |
| Helligkeitsverteilung | Die Helligkeitsverteilung wird ebenfalls über die Lichtverteilung der Abbildungsfläche beurteilt und kennzeichnet demnach, inwieweit die Abbildung vom Zentrum zum Rand aus geleuchtet wird. |
| Bildschärfe | Unter der Bildschärfe ist zu verstehen, inwieweit das Testbild klar erkannt werden kann. |
| Auflösung | Die Auflösung der Abbildung gibt wieder, inwieweit feine Strukturen auf der beurteilten Platte verzerrt werden. |
| Bildruhe | Unter Bildruhe ist zu verstehen, inwieweit der Betrachter in der Lage ist die Projektion über längeren Zeitraum aufzunehmen, ohne das seine Augen zu stark beansprucht werden. |

In den Tabellen wurden sehr gute Eigenschaften mit ++, gute Eigenschaften mit +, befriedigende Eigenschaften mit 0, mangelhafte Eigenschaften mit -, sehr mangelhafte Eigenschaften mit -- und ungenügende Eigenschaften mitmarkiert.

### B) Herstellung von Kunststoffpartikeln

Kunststoffpartikel B1 Zur Herstellung von sphärischen Kunststoffpartikeln wurde ein Aluminiumhydroxid-Pickering-Stabilisator verwendet, der durch Fällung aus Aluminiumsulfat und Sodalösung unmittelbar vor Beginn der eigentlichen Polymerisation hergestellt wurde. Hierzu wurden zunächst 16 g Al₂(SO₄)₃, 0,032 g Komplexbildner (Trilon A) und 0,16 g Emulgator (Emulgator K 30 erhältlich von der Fa. Bayer AG; Natriumsalz eines C₁₅-Paraffinsulfonats) in 0,81 destilliertem Wasser gelöst. Anschließend wurde bei einer Temperatur von ca. 40°C eine 1 N Natriumcarbonat-Lösung zu dem in Wasser gelöstem Aluminiumsulfat unter Rühren zugegeben, wobei der pH-Wert anschließend im Bereich von 5 bis 5,5 lag. Durch diese Vorgehensweise wurde eine kolloidale Verteilung des Stabilisators im Wasser erzielt.

Nach der Fällung des Stabilisators wurde die wässrige Phase in ein Becherglas überführt. Hierzu wurden 110g Methylmethacrylat, 80g Benzylmethacrylat und 10g Allylmethacrylat sowie 4g Dilaurylperoxyd und 0,4g tert.-Butylper-2-ethylhexanoat gegeben. Diese Mischung wurde mittels eines Dispergators (Ultra-Turrax S50N-G45MF, Fa. Janke und Kunkel, Staufen) 15 Minuten bei 7000 U/min dispergiert.

Im Anschluss an die Scherung wurde das Reaktionsgemisch in den Reaktor, welcher auf die entsprechende Reaktionstemperatur von 80 °C vorgeheizt wurde, eingefüllt und bei ca. 80°C (Polymerisationstemperatur) 45 Minuten (Polymerisationsdauer) unter Rühren (600 U/min) polymerisiert. Es folgte eine Nachreaktionsphase von 1 Stunde bei ca. 85°C Innentemperatur. Nach Abkühlen auf 45°C wurde der Stabilisator durch Zusatz von 50%iger Schwefelsäure in wasserlösliches Aluminiumsulfat überführt. Zur Aufarbeitung der Perlen wurde die erhaltene Suspension über ein handelsübliches Filtertuch filtriert und im Wärmeschrank 24 Stunden bei 50°C getrocknet.

Die Größenverteilung wurde durch Laserextinktionsverfahren untersucht. Die Teilchen wiesen eine mittlere Größe V₅₀ von 18,6 µm auf. Die Perlen hatten eine sphärische Form, wobei keine Fasern festgestellt werden konnten. Koagulation trat nicht auf. Im folgenden werden die so erhaltenen Partikel mit Kunststoffpartikel B1 bezeichnet.

### Kunststoffpartikel B2

Zur Herstellung von sphärischen Kunststoffpartikeln wurde ein Aluminiumhydroxid-Pickering-Stabilisator verwendet, der durch Fällung aus Aluminiumsulfat und Sodalösung (1 N Natriumcarbonat-Lösung) unmittelbar vor Beginn der eigentlichen Polymerisation hergestellt wurde. Hierzu wurden zunächst 38 L ention. Wasser, 400 g Aluminiumsulfat und 8 g Komplexbildner (Trilon A) unter Rühren (330 Upm) mit einem Impellerrührer in einem mit N₂ gespülten 100 L V4A-Kessel mit Wellenbrecher, Ni-Cr-Ni-Thermoelement und Umlaufheizung vorgelegt. Im Anschluss erfolgt die Zugabe von 1760 g Sodalösung zur Fällung des Aluminiumhydroxids, sowie die Zugabe der Hilfsverteiler Emulgator K30 (4 g) erhältlich von der Fa. Bayer AG (Natriumsalz eines C15-Paraffinsulfonats) und Polywachs 5000/6000 (4 g) erhältlich von der Fa. Höchst (Polyethylenglycol mit einem Molgewicht im Bereich von 5000-6000), jeweils gelöst in 240 ml ention. Wasser. Der pH-Wert lag im Anschluss an die Fällung bei ca. 5,3, wodurch eine kolloidale Verteilung des Stabilisators im Wasser erzielt wurde.

Ebenfalls bei Raumtemperatur erfolgt danach die Zugabe einer Monomermischung bestehend aus 6900 g Methylmethacrylat, 3000 g Styrol, 100 g Glycoldimethacrylat, 200 g Dilauroylperoxyd, 20 g tert.-Butylper-2-ethylhexanoat und 50 g 2-Ethylhexylthioglycolat.

Es erfolgt die Aufheizphase bis auf eine Temperatur von 80°C, wobei bei einer Kesselinnentemperatur von 40°C der Reaktor druckdicht verschlossen und die N₂-Einleitung abgestellt wurde. In den nächsten 115 Minuten steigt die Innentemperatur bis auf ca. 87°C an und der Druck erhöht sich von 0,70 auf 0,92 bar. Nach dem Temperaturmaxima wurde das Reaktionsgemisch auf ca. 87-88°C aufgeheizt und bei dieser Temperatur ca. eine Stunde nachgerührt, wobei die Rührgeschwindigkeit auf 200 Upm verringert wurde. Nachdem das Reaktionsgemisch abgekühlt wurde, wurde bei einer Temperatur von 46°C der Kessel entspannt und anschließend 400 ml 50%iger Schwefelsäure zugegeben, wodurch das Aluminiumhydroxid ins lösliche Aluminiumsulfat überführt wird und dadurch das Suspensionspolymerisat ausfällt. Zur Aufarbeitung der Perlen wurde die erhaltene Suspension über eine Steinzeugnutsche mit Filtertuch filtriert, neutral gewaschen und bei 50°C ca. 20 Stunden im Wärmeschrank getrocknet.

Die Größenverteilung wurde durch Laserextinktionsverfahren untersucht. Die Teilchen wiesen eine mittlere Größe V₅₀ von 40,5 µm auf. Die Perlen hatten eine sphärische Form, wobei keine Fasern festgestellt werden konnten. Koagulation trat nicht auf. Im folgenden werden die so erhaltenen Partikel mit Kunststoffpartikel B2 bezeichnet.

### C) Beispiele 1 bis 4

Es wurden verschiedene Rückprojektionsschirme durch Extrusion hergestellt. Hierzu wurden zu Beginn verschiedene Streuperlencompounds aus Kunststoffpartikeln B1, Kunststoffpartikel B2, Kunststoffpartikel auf Basis von Styrol mit einer Partikelgröße V₅₀ von ca. 8,4 µm, die unter der Handelsbezeichnung ®Techpolymer SBX-8 von der Fa. Sekisui kommerziell erhältlich sind, sowie eine von der Fa. Röhm GmbH & Co. KG erhältliche PMMA-Formmasse (Copolymer aus 97 Gew.-% Methylmethacrylat und 3 Gew.-% Methylacrylat) zu Kunststoffplatten extrudiert. Zum Einsatz kam ein Extruder 060 mm der Fa. BREYER. Die Temperatur der Schmelze beim Düsenaustritt betrug im allgemeinen 270°C. Das Glättwerk wurde im allgemeinen, insbesondere bei den Beispielen so eingestellt, dass eine möglichst raue Oberfläche erzielt wurde.

Der Anteil an Kunststoffpartikeln in der Polymethylmethacrylat-Matrix sowie die Dicke der Platten sind in Tabelle 2 dargestellt.

**Tabelle 2**

| | Beispiel 1 | Beispiel 2 | Beispiel 3 | Beispiel 4 |
|---|---|---|---|---|
| Dicke [mm] | 0,5 | 0,5 | 0,5 | 0,5 |
| PMMA-Matrix [Gew.-%] | 88 | 82 | 88 | 82 |
| ®SBX8 [Gew.-%] | 6 | 6 | 6 | 6 |
| Kunststoffpartikel B1 [Gew.-%] | 0 | 0 | 6 | 12 |
| Kunststoffpartikel B2 [Gew.-%] | 6 | 12 | 0 | 0 |

Die erhaltenen Rückprojektionsschirme wurden gemäß den zuvor dargestellten Meßmethoden untersucht, wobei die erhaltenen Messergebnisse in Tabelle 3 wiedergegeben sind.

**Tabelle 3**

| | Beispiel 1 | Beispiel 2 | Beispiel 3 | Beispiel 4 |
|---|---|---|---|---|
| Transmission [%] | 71,4 | 73,14 | 71,95 | 71,34 |
| Gelbwert G(τ_{D65/10°}) | 5,36 | 4,86 | 5,2 | 5,3 |
| Streuvermögen σ | 0,6 | 0,56 | 0,6 | 0,6 |
| Intensitäts halbwertswinkel y [°] | 49 | 43 | 49 | 49 |
| R_{Z} [µm] | 15,0 | 25,4 | 6,1 | 7,6 |
| Glanzmessung R85° | 14,8 | 4,6 | 25,3 | 8,6 |
| C_{PA}*d_{S} /D_{PA}³ [Gew.-%*mm/ [µm³] | 0,00505 | 0,00505 | 0,00505 | 0,00505 |
| C_{PB}*d_{S} /D_{PB}³ [Gew.-%*mm/ µm³] | 0,000045 | 0,000090 | 0,000466 | 0,00093 |
| R_{Z}²/D_{PB}³ | 0,00338 | 0,00968 | 0,00263 | 0,00416 |
| Hotspot | ++ | ++ | ++ | ++ |
| Helligkeits verteilung | ++ | ++ | ++ | ++ |
| Bildschärfe | + | + | +/++ | ++ |
| Auflösung | fein -sehr fein | fein - sehr fein | sehr fein | Sehr fein |
| Bildruhe | + | 0/+ | + | + |

Des weiteren wurde die visuelle Kratzempfindlichkeit der Extrudate untersucht.

Die Prüfung der Kratzempfindlichkeit erfolgte durch die Eindringtiefe eines Diamanten t_{R} = f (Belastung) mit dem Ritzprüfgerät Modell 203 von Taber Industries, in Anlehnung an DIN 53799 und DIN EN 438: Diamantstichel mit Kegelwinkel 90°, Spitzenradius 90 µm, Drehrichtung entgegen Uhrzeigersinn. Die eingesetzten Belastungen sind in Tabelle 4 dargelegt.

Die visuelle Beurteilung wurde auf einer schwarzen Unterlage durchgeführt (Reflexionsprüfung). Die Untersuchungen (Rauhigkeit, Glanz) an den Versuchsextrudaten erfolgte auf der Oberseite.

Die erhaltenen Ergebnisse sind in Tabelle 4 aufgeführt.

**Tabelle 4**

| Belastung des Diamanten | Beispiel 1 | Beispiel 2 |
|---|---|---|
| 0,4 N | Schädigung nicht erkennbar | Schädigung nicht erkennbar |
| 0,7 N | Schädigung nicht erkennbar | Schädigung nicht erkennbar |
| 1,0 N | Schädigung nicht erkennbar | Schädigung nicht erkennbar |
| 1,5 N | Schädigung nicht erkennbar | Schädigung nicht erkennbar |
| 2,0 N | Schädigung kaum erkennbar (ausspiegeln, stark winkelabhängig) | Schädigung kaum erkennbar (ausspiegeln, stark winkelabhängig) |
| 3,0 N | Schädigung erkennbar | Schädigung erkennbar (ausspiegeln) |
| 0,4 N | Schädigung nicht erkennbar | Schädigung nicht erkennbar |
| 0,7 N | Schädigung nicht erkennbar | Schädigung nicht erkennbar |
| 1,0 N | Schädigung nicht erkennbar | Schädigung nicht erkennbar |
| 1,5 N | Schädigung kaum erkennbar (ausspiegeln, stark winkelabhängig) | Schädigung kaum erkennbar (ausspiegeln, stark winkelabhängig) |
| 2,0 N | Schädigung kaum erkennbar (ausspiegeln, stark winkelabhängig) | Schädigung kaum erkennbar (ausspiegeln, stark winkelabhängig) |
| 3,0 N | Schädigung erkennbar | Schädigung erkennbar |

### D) Beispiele 5 und 6

Das zuvor in den Beispielen 1 bis 4 beschriebene Herstellungsverfahren wurde im wesentlichen wiederholt, wobei jedoch zusätzlich Schlagzähmodifier (®Metablen IR 441, erhältlich von Mitsubishi) hinzugefügt wurden. Des weiteren wurde ein eingefärbter Rückprojektionsschirm hergestellt, der ebenfalls schlagzäh ausgerüstet wurde. Der Farbstoff bestand aus einer Mischung von 52,66 Gew.-% ®Sandoplast Rot G, 0,84 Gew.-% ®Sandoplast Gelb 2G (jeweils erhältlich von Clariant) sowie 39,22 Gew.-% ®Macrolex Grün 5B und 7,28 Gew.-% ®Macrolex Violett 3R (jeweils erhältlich von Bayer).

Der Anteil an Kunststoffpartikeln in der Polymethylmethacrylat-Matrix sowie die Dicke der Platten sind in Tabelle 5 dargestellt.

**Tabelle 5**

| | Beispiel 1 | Beispiel 5 | Beispiel 6 |
|---|---|---|---|
| Dicke [mm] | 0,5 | 0,5 | 0,5 |
| PMMA-Matrix [Gew.-Teile] | 88 | 53 | 53 |
| ®SBX8 [Gew.-%] | 6 | 6 | 6 |
| Kunststoffpartikel B1 [Gew.-%] | 0 | 0 | 0 |
| Kunststoffpartikel B2 [Gew.-%] | 6 | 6 | 6 |
| ®Metablen IR 441 [Gew.-Teile] | 0 | 35 | 35 |
| Farbstoff [Gew.-Teile] | 0 | 0 | 0,02142 |

Die erhaltenen Rückprojektionsschirme wurden gemäß den zuvor dargestellten Meßmethoden untersucht, wobei die erhaltenen Messergebnisse in Tabelle 6 wiedergegeben sind.

Darüber hinaus wurden die mechanischen Eigenschaften der Rückprojektionsschirme untersucht. Die Zugfestigkeit, die Bruchdehnung sowie der E-Modul wurden gemäß ISO 527-2 und die Reflexion gemäß DIN 5036 bestimmt.

**Tabelle 6**

| | Beispiel 1 | Beispiel 5 | Beispiel 6 |
|---|---|---|---|
| Transmission [%] | 71,4 | 73,43 | 39,74 |
| Gelbwert G(τ_{D65/10°}) | 5,36 | 4,88 | - |
| Streuvermögen σ | 0,6 | 0,56 | 0,59 |
| Intensitäts halbwertswinkel γ [°] | 49 | 43 | 48 |
| Reflexion (ρ_{D65/2°}) [%] | 26,72 | 25,26 | 11,21 |
| Zugfestigkeit (σ-M; 5mm/min) [MPa] | 64,6 | 34,5 | 33,8 |
| E-Modul (1 mm/min) [MPa] | 3258 | 1642 | 1621 |
| Bruchdehnung (ε-B; 5mm/min) [%] | 3,4 | 23,6 | 17,1 |
| R_{Z} [µm] | 15,0 | 16,0 | 20,1 |
| Glanzmessung R85° | 14,8 | 9,9 | 5,4 |
| Hotspot | ++ | ++ | ++ |
| Helligkeits verteilung | ++ | ++ | ++ |
| Bildschärfe | + | + | + |
| Auflösung | fein -sehr fein | fein - sehr fein | fein - sehr fein |
| Bildruhe | + | + | + |

### Rückprojektionsschirme für die 3D-Projektion.

Der erfindungsgemäße Rückprojektionsschirm kann auch für die 3D-Projektion von Bilder oder Filmen eingesetzt werden.

Beim Verfahren der 3D-Projektion werden als Bildquelle jeweils zwei Projektionen überlagert, die im Prinzip denselben Bildinhalt übertragen, der jedoch in einem gewissen Abstand, z. B. im Augenabstand, versetzt aufgenommen wurden. Ein häufig verwendetes Prinzip ist z. B. das Polarisationsverfahren. Mittels Projektoren, die mit polarisiertem Licht arbeiten, wird das Licht beider Aufnahmen mit unterschiedlichen Polarisationsausrichtungen auf den Rückprojektionsschirm abgestrahlt.

Der Betrachter betrachtet das Bild durch eine Brille, die jeweils getrennt für das rechte und das linke Auge mit entsprechenden Polarisationsfiltern ausgestattet ist. Das menschliche Gehirn verarbeitet die beiden unterschiedlichen Bildeindrücke zu einer dreidimensionalen Bildwahrnehmung.

Für die Zwecke der 3D-Projektion können die erfindungsgemäßen Rückprojektionsschirme bevorzugt aus extrudiertem Polymethylmethacrylat-Kunststoff in Form einer Platte oder Folie umfassend mindestens eine lichtstreuende Schicht aus extrudiertem Polymethylmethacrylat-Kunststoff gefertigt werden, wobei der Gangunterschied aufgrund der optischen Doppelbrechung insgesamt höchstens 25 nm, bevorzugt höchstens 15, besonders bevorzugt höchstens 5 nm beträgt.

Hierbei ist zu beachten, daß das Extrusionsverfahren immer eine gewisse Ausrichtung der Molekülketten in Extrusionsrichtung bewirkt. Diese Ausrichtung führt zu Doppelbrechungseigenschaften, die das polarisierte Licht der beiden Projektionen teilweise depolarisiert, was natürlich unerwünscht ist.

Besonders bevorzugt wird der extrudierte Polymethylmethacrylat-Kunststoff für Rückprojektionsschirme, die für die 3D-Projektion vorgesehen sind, daher nach der Extrusion einer thermischen Nachbehandlung unterzogen. Bei der thermischen Nachbehandlung kommt es zu einer Rückschrumpfung, die die Ausrichtung der Polymermoleküle wieder weitgehend aufhebt. Das Resultat ist, daß die ursprünglich im Material vorhandene Doppelbrechungseigenschaft stark vermindert wird.

Die thermische Nachbehandlung von extrudiertem Polymethylmethacrylat-Kunststoff in Form von Folien oder Platten, die für Rückprojektionsschirme für die 3D-Projektion vorgesehen sind, kann z. B. im Bereich von 110 bis 190, bevorzugt 120 bis 160 °C für 5 Minuten bis 24 Stunden, bevorzugt 10 Minuten bis 2 Stunden, je nach Materialzusammensetzung und Materialstärke erfolgen. Ein Fachmann kann dies leicht optimieren. Der thermisch bewirkte Rückschrumpfungsvorgang kann mit liegendem oder bevorzugt an hängendem Material vorgenommen werden.

Geeignete Meßmethoden zur Messung des Gangunterschiedes aufgrund der optischen Doppelbrechung sind dem Fachmann bekannt. Der Gangunterschied kann z. B. gemessen werden mit Hilfe eines Polarisationsmikroskops in Kombination mit einem Ehringhaus-Kippkompensator.

## Patentansprüche

1. Rückprojektionsschirm umfassend mindestens eine lichtstreuende Polymethylmethacrylat-Schicht, die eine Polymethylmethacrylat-Matrix sowie sphärische Streupartikel (A) und sphärische Partikel (B) mit unterschiedlicher mittlerer Teilchengröße V₅₀ umfasst, wobei die sphärischen Streupartikel (A) eine mittlere Teilchengröße V₅₀ im Bereich von 0,1 bis 40 µm und einen Brechungsindexunterschied zur Polymethylmethacrylat-Matrix im Bereich von 0,02 bis 0,2 aufweisen, wobei die sphärischen Partikel (B) eine mittlere Teilchengröße V₅₀ im Bereich von 10 bis 150 µm und einen Brechungsindexunterschied zur Polymethylmethacrylat-Matrix im Bereich von 0 bis 0,2 aufweisen, wobei die Gesamtkonzentration der sphärischen Streupartikel (A) und Partikel (B) im Bereich von 1 bis 60 Gew.-%, bezogen auf das Gewicht der lichtstreuenden Polymethylmethacrylat-Schicht, beträgt, **dadurch gekennzeichnet, dass** die Konzentration der sphärischen Streupartikel (A) C_{PA}, die Dicke der lichtstreuenden Polymethylmethacrylat-Schicht d_{S} sowie die Teilchengröße der sphärischen Streupartikel (A) D_{PA} so gewählt wird, dass das Verhältnis c_{PA}*d_{S}/D_{PA}³ im Bereich von 0,001 bis 0,015 Gew.-%*mm/µm³, die Konzentration der sphärischen Partikel (B) c_{PB}, die Dicke der lichtstreuenden Polymethylmethacrylat-Schicht d_{S} sowie die Teilchengröße der sphärischen Partikel (B) D_{PB} so gewählt wird, dass das Verhältnis c_{PB}*d_{S}/D_{PB}³ im Bereich von 0,000005 bis 0,002 Gew.-%*mm/µm³ und das Verhältnis des Quadrats von mittlerer Oberflächenrauhigkeit der Polymethylmethacrylat-Schicht R_{Z} zur dritten Potenz der Teilchengröße der sphärischen Partikel (B) R_{Z}²/D_{PB}³ im Bereich von 0,0002 µm⁻¹ is 0,1300 µm⁻¹ liegt.

2. Rückprojektionsschirm gemäß Anspruch 1, **dadurch gekennzeichnet, dass** das Verhältnis des Quadrats von mittlerer Oberflächenrauhigkeit der Polymethylmethacrylat-Schicht R_{Z} zur dritten Potenz der Teilchengröße der sphärischen Partikel (B) R_{Z}²/D_{PB}³ im Bereich von 0,0025 µm⁻¹ bis 0,0600 µm⁻¹_liegt.

3. Rückprojektionsschirm gemäß Anspruch 1 oder 2, **dadurch gekennzeichnet, dass** das Verhältnis von Konzentration der Partikel (B) c_{PB} zur Dicke der lichtstreuenden Polymethylmethacrylat-Schicht d_{S} c_{PB}/d_{S} größer oder gleich 2,5 Gew.-%/mm ist.

4. Rückprojektionsschirm gemäß einem der vorhergehenden Ansprüchen, **dadurch gekennzeichnet, dass** die lichtstreuende Polymethylmethacrylat-Schicht einen Glanz R85° kleiner oder gleich 40 aufweist.

5. Rückprojektionsschirm gemäß einem der vorhergehenden Ansprüchen, **dadurch gekennzeichnet, dass** das Verhältnis c_{PA}*d_{S} /D_{PA}³ im Bereich von 0,0025 bis 0,009 Gew.-%*mm/µm² liegt.

6. Rückprojektionsschirm gemäß einem der vorhergehenden Ansprüchen, **dadurch gekennzeichnet, dass** das Verhältnis c_{PB}*d_{S} /D_{PB}³ im Bereich von 0,00004 bis 0,0015 Gew.-%*mm/µm³ liegt.

7. Rückprojektionsschirm gemäß einem der vorhergehenden Ansprüche, **dadurch gekennzeichnet, dass** die lichtstreuende Polymethylmethacrylat-Schicht des Rückprojektionsschirm eine Dicke im Bereich von 0,05 bis 1 mm aufweist.

8. Rückprojektionsschirm gemäß einem der vorhergehenden Ansprüche, **dadurch gekennzeichnet, dass** die sphärischen Streupartikel (A) und/oder sphärischen Partikel (B) vernetzes Polystyrol, Polysilikon und/oder vernetzte Poly(meth)acrylate umfassen.

9. Rückprojektionsschirm gemäß einem der vorhergehenden Ansprüche, **dadurch gekennzeichnet, dass** die lichtstreuende Polymethylmethacrylat-Schicht eingefärbt ist.

10. Rückprojektionsschirm gemäß einem der vorhergehenden Ansprüche, **dadurch gekennzeichnet, dass** die Matrix der lichtstreuenden Polymethylmethacrylat-Schicht einen Brechungsindex gemessen bei der Na-D-Linie (589 nm) und bei 20°C im Bereich von 1,46 bis 1,54 aufweist.

11. Rückprojektionsschirm gemäß einem der vorhergehenden Ansprüche, **dadurch gekennzeichnet, dass** die mittlere Oberflächenrauhigkeit R_{Z} der Platte im Bereich von 4 bis 50 µm liegt.

12. Rückprojektionsschirm gemäß einem der vorhergehenden Ansprüchen, **dadurch gekennzeichnet, dass** die mittlere Teilchengröße V₅₀ der sphärischen Partikel (B) mindestens 5 µm größer ist als die mittlere Teilchengröße der Streupartikel (A).

13. Rückprojektionsschirm gemäß einem der vorhergehenden Ansprüche, **dadurch gekennzeichnet, dass** die sphärischen Streupartikel (A) eine mittlere Größe V₅₀ im Bereich von 5 bis 20 µm aufweisen.

14. Rückprojektionsschirm gemäß einem der vorhergehenden Ansprüche, **dadurch gekennzeichnet, dass** die sphärischen Partikel (B) eine mittlere Teilchengröße V₅₀ im Bereich von 15 bis 60 µm aufweisen.

15. Rückprojektionsschirm gemäß einem der vorhergehenden Ansprüche, **dadurch gekennzeichnet, dass** die Kratzer, die mit einer Kraft von höchstens 0,7 N auf dem Schirm erzeugt wurden, visuell nicht erkennbar sind.

16. Rückprojektionsschirm gemäß einem der vorhergehenden Ansprüche, **dadurch gekennzeichnet, dass** der Schirm zusätzlich eine Trägerschicht umfasst, die einen Intensitätshalbwertswinkel kleiner als 6,5° aufweist.

17. Rückprojektionsschirm gemäß Anspruch 16, **dadurch gekennzeichnet, dass** die Trägerschicht eine mittlere Oberflächenrauhigkeit R_{Z} im Bereich von 3 µm bis 40 µm aufweist.

18. Rückprojektionsschirm gemäß Anspruch 16 oder 17, **dadurch gekennzeichnet, dass** die Trägerschicht Poly(meth)acrylate aufweist.

19. Rückprojektionsschirm gemäß einem der vorhergehenden Ansprüche, **dadurch gekennzeichnet, dass** der Rückprojektionsschirm eine Dicke im Bereich von 0,05 bis 5 mm aufweist.

20. Rückprojektionsschirm gemäß einem der vorhergehenden Ansprüche, **dadurch gekennzeichnet, dass** der Schirm eine Transmission größer oder gleich 25% aufweist.

21. Rückprojektionsschirm gemäß einem der vorhergehenden Ansprüche, **dadurch gekennzeichnet, dass** der Schirm einen Gelbwert kleiner oder gleich 12 aufweist.

22. Rückprojektionsschirm gemäß einem der vorhergehenden Ansprüche, **dadurch gekennzeichnet, dass** der Schirm einen Intensitätshalbwertswinkel größer oder gleich 15° aufweist.

23. Rückprojektionsschirm gemäß einem der vorhergehenden Ansprüche, **dadurch gekennzeichnet, dass** der Schirm ein Streuvermögen größer oder gleich 0,15 aufweist.

24. Rückprojektionsschirm gemäß einem der vorhergehenden Ansprüche, **dadurch gekennzeichnet, dass** der Schirm aus extrudiertem Polymethylmethacrylat-Kunststoff mit einem Gangunterschied aufgrund der optischen Doppelbrechung von höchstens 25 nm besteht.

25. Verfahren zur Herstellung eines Rückprojektionsschirms gemäß einem der Ansprüche 1 bis 24, **dadurch gekennzeichnet, dass** man eine Polymethylmethacrylat, sphärische Streupartikel (A) und sphärische Partikel (B) umfassende Formmasse extrudiert.

26. Verfahren nach Anspruch 25, **dadurch gekennzeichnet, daß** man eine Platte oder Folie extrudiert und die extrudierte Platte oder Folie anschließend für 5 Minuten bis 24 Stunden auf 110 bis 190°C erhitzt.

27. Verwendung eines Rückprojektionsschirms gemäß einem der Ansprüche 1 bis 24 in lichttechnischen Anwendungen.

28. Verwendung gemäß Anspruch 27 als Streuscheibe in LCD-Monitoren.

29. Verwendung eines Rückprojektionsschirms gemäß Anspruch 24 für die 3D-Projektion.
